# EUROPEAN PATENT APPLICATION

(11) **EP 4 585 622 A1**
(43) Date of publication of application: **16.07.2025**
(21) Application number: 23871874.6
(22) Date of filing: 11.09.2023
(51) Int. Cl.: C08F 220/18, C08F 8/00

(54) **ACRYLIC RUBBER, RUBBER COMPOSITION, AND CROSSLINK PRODUCT**

(30) Priority: 30.09.2022 JP 2022158465
(71) Applicant: Denka Company Limited, Tokyo 103-8338 (JP)
(72) Inventor: NAKANO, Tatsuya, Tokyo 103-8338 (JP); MIYAUCHI, Toshiaki, Tokyo 103-8338 (JP)
(74) Representative: Hoffmann Eitle
(86) International application number: PCT/JP2023/033053
(87) International publication number: WO 2024/070638

(57) **Abstract**

An acrylic rubber containing a (meth)acrylate, a vinyl carboxylate, and ethylene, as monomer units, wherein a content of the vinyl carboxylate is 15% by mass or more and a content of the ethylene is 5% by mass or more, based on a total amount of the monomer units in the acrylic rubber.

## Description

### Technical Field

The present disclosure relates to an acrylic rubber, a rubber composition, and a crosslinked product thereof.

### Background Art

Crosslinked products of acrylic rubbers are used as materials for hoses and sealing parts in automobile engine compartments due to their excellent properties such as heat resistance, oil resistance, and mechanical properties. For example, Patent Literature 1 discloses an acrylic rubber composition that maintains normal physical properties and exhibits excellent heat resistance, particularly elongation at break and elongation retention after thermal aging, which is obtained by copolymerizing 100 parts by mass of an alkyl (meth)acrylate, 1 to 10 parts by mass of a vinyl acetate, and 1 to 3 parts by mass of a crosslinking monomer.

### Citation List

### Patent Literature

Patent Literature 1: JP 2009-91437

### Summary of Invention

### Technical Problem

According to the studies by the present inventors, it was found that when attempting to increase the tensile strength, which is one of the mechanical properties (normal physical properties) of the crosslinked product of acrylic rubber, the oil resistance of the crosslinked product may deteriorate.

Therefore, an aspect of the present invention aims to provide an acrylic rubber that can yield a crosslinked product with high tensile strength and excellent oil resistance.

### Solution to Problem

The present inventors have found that an acrylic rubber containing a (meth)acrylate, a vinyl carboxylate, and ethylene, as monomer units, wherein the content of the vinyl carboxylate and the content of ethylene are each above a specific amount, can provide an acrylic rubber that yields a crosslinked product with high tensile strength and excellent oil resistance.

The present invention includes the following aspects:
[1] An acrylic rubber containing a (meth)acrylate, a vinyl carboxylate, and ethylene, as monomer units, wherein a content of the vinyl carboxylate is 15% by mass or more and a content of the ethylene is 5% by mass or more, based on a total amount of the monomer units in the acrylic rubber.
[2] The acrylic rubber according to [1], wherein a mass ratio of the content of ethylene to the content of the vinyl carboxylate is 0.1 to 0.5.
[3] The acrylic rubber according to [1] or [2], wherein the (meth)acrylate contains at least one selected from the group consisting of an alkyl (meth)acrylate and an alkoxy (meth)acrylate.
[4] The acrylic rubber according to any one of [1] to [3], wherein the vinyl carboxylate contains at least one selected from the group consisting of vinyl acetate, vinyl neodecanoate, and vinyl laurate.
[5] A rubber composition containing the acrylic rubber according to any one of [1] to [4], and a crosslinking agent.
[6] A crosslinked product of the rubber composition according to [5].

### Advantageous Effects of Invention

An aspect of the present invention can provide an acrylic rubber that yields a crosslinked product with high tensile strength and excellent oil resistance.

### Description of Embodiments

Hereinafter, embodiments of the present invention will be described in detail, but the present invention is not limited to these embodiments.

An embodiment of the present invention is an acrylic rubber containing a (meth)acrylate, a vinyl carboxylate, and ethylene, as monomer units. In this specification, "(meth)acrylate" is used to include both an acrylate and the corresponding methacrylate.

The (meth)acrylate preferably contains at least one selected from the group consisting of an alkyl (meth)acrylate and an alkoxy (meth)acrylate.

The alkyl group in the alkyl (meth)acrylate may be linear or branched. The number of carbon atoms in the alkyl group in the alkyl (meth)acrylate may be 1 or more and 16 or less.

The content of the alkyl (meth)acrylate may be 10% by mass or more, 20% by mass or more, 30% by mass or more, 40% by mass or more, or 50% by mass or more, and may be 90% by mass or less, 80% by mass or less, 70% by mass or less, or 60% by mass or less, based on the total amount of the monomer units in the acrylic rubber.

The alkyl (meth)acrylate contains at least one selected from the group consisting of acrylates and methacrylates, and preferably contains an acrylate.

The alkyl acrylate is represented by the following formula (1): 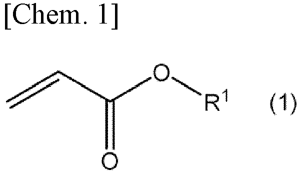 wherein R¹ represents an alkyl group.

The alkyl group (R¹) in the alkyl acrylate may be linear or branched. The number of carbon atoms in the alkyl group (R¹) in the alkyl acrylate may be 1 or more and 16 or less. Specific examples of the alkyl acrylate include methyl acrylate, ethyl acrylate, n-propyl acrylate, isopropyl acrylate, n-butyl acrylate, isobutyl acrylate, n-pentyl acrylate, isoamyl acrylate, n-hexyl acrylate, 2-methylpentyl acrylate, n-octyl acrylate, 2-ethylhexyl acrylate, lauryl acrylate, hexadecyl acrylate, 1-adamantyl acrylate, and cyclohexyl acrylate. These alkyl acrylates may be used singly or in combination of two or more.

The content of the alkyl acrylate may be 10% by mass or more, 20% by mass or more, 30% by mass or more, 40% by mass or more, or 50% by mass or more, and may be 90% by mass or less, 80% by mass or less, 70% by mass or less, or 60% by mass or less, based on the total amount of the monomer units in the acrylic rubber.

From the viewpoint of further improving the oil resistance of the crosslinked product of the acrylic rubber, the alkyl acrylate preferably contains an alkyl acrylate having an alkyl group having 3 or less carbon atoms (first alkyl acrylate). The alkyl acrylate may further contain an alkyl acrylate having an alkyl group having 4 or more carbon atoms (second alkyl acrylate).

The number of carbon atoms in the alkyl group of the first alkyl acrylate may be 1 or more and 2 or less, and may be 2. The first alkyl acrylate is preferably ethyl acrylate. The number of carbon atoms in the alkyl group of the second alkyl acrylate may be 8 or less, 6 or less, or 5 or less, and may be 4. The second alkyl acrylate is preferably n-butyl acrylate.

The content of the first alkyl acrylate may be 10% by mass or more, 20% by mass or more, 30% by mass or more, 40% by mass or more, or 50% by mass or more, and may be 90% by mass or less, 80% by mass or less, 70% by mass or less, or 60% by mass or less, based on the total amount of the monomer units in the acrylic rubber.

The content of the second alkyl acrylate may be 5% by mass or more, 10% by mass or more, or 20% by mass or more, and may be 60% by mass or less, 50% by mass or less, or 40% by mass or less, based on the total amount of the monomer units in the acrylic rubber.

The alkyl methacrylate is represented by the following formula (2): 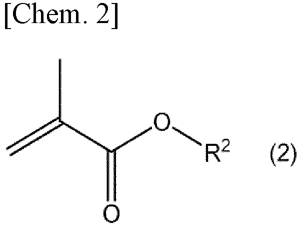 wherein R² represents an alkyl group.

The alkyl group (R²) in the alkyl methacrylate may be linear or branched. The number of carbon atoms in the alkyl group (R²) in the alkyl methacrylate may be 1 or more and 4 or less, preferably 2 or more or 3 or more, and may be 3. Specific examples of the alkyl methacrylate include methyl methacrylate, ethyl methacrylate, n-propyl methacrylate, isopropyl methacrylate, n-butyl methacrylate, and isobutyl methacrylate. These alkyl methacrylates may be used singly or in combination of two or more. From the viewpoint of improving the heat resistance of the acrylic rubber, the alkyl methacrylate is preferably n-butyl methacrylate.

The content of the alkyl methacrylate may be 5% by mass or more, 7% by mass or more, or 10% by mass or more, and may be 30% by mass or less, 20% by mass or less, or 15% by mass or less, based on the total amount of the monomer units in the acrylic rubber.

The (meth)acrylate is represented by the following formula (3): 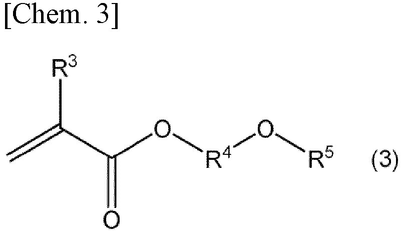 wherein R³ represents a hydrogen atom or a methyl group, R³ represents an alkylene group, and R⁴ represents an alkyl group.

The alkylene group (R⁴) and the alkyl group (R⁵) in the (meth)acrylate may be linear or branched. The number of carbon atoms in the alkylene group (R⁴) in the (meth)acrylate may be 1 or more or 2 or more, and may be 4 or less or 3 or less. The number of carbon atoms in the alkyl group (R⁵) in the (meth)acrylate may be 1 or more, and may be 4 or less, 3 or less, or 2 or less.

Specific examples of the (meth)acrylate include 2-methoxyethyl (meth)acrylate, 2-ethoxyethyl (meth)acrylate, 2-(n-propoxy)ethyl (meth)acrylate, 2-(n-butoxy)ethyl (meth)acrylate, 3-methoxypropyl (meth)acrylate, 3-ethoxypropyl (meth)acrylate, 2-(n-propoxy)propyl (meth)acrylate, and 2-(n-butoxy)propyl (meth)acrylate. These (meth)acrylates may be used singly or in combination of two or more.

The content of the (meth)acrylate may be 5% by mass or more, 10% by mass or more, or 15% by mass or more, and may be 30% by mass or less, 25% by mass or less, or 20% by mass or less, based on the total amount of the monomer units in the acrylic rubber.

The vinyl carboxylate is preferably a vinyl carboxylate (vinyl ester of an aliphatic monocarboxylic acid) represented by the following formula (4): 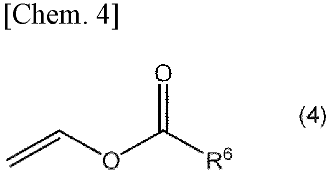 wherein R⁶ represents an alkyl group.

The alkyl group represented by R⁶ may be linear or branched. The number of carbon atoms in the alkyl group represented by R⁶ may be 1 or more and may be 12 or less, 11 or less, 10 or less, or 9 or less. Specific examples of the vinyl carboxylate include vinyl acetate, vinyl neodecanoate, vinyl laurate, vinyl propionate, vinyl butyrate, vinyl caproate, vinyl caprylate, vinyl caprate, vinyl octanoate, and vinyl pivalate. The vinyl carboxylate preferably contains at least one selected from the group consisting of vinyl acetate, vinyl neodecanoate, and vinyl laurate, and more preferably contains vinyl acetate.

The content of the vinyl carboxylate may be 15% by mass or more, preferably 17% by mass or more, 20% by mass or more, 25% by mass or more, 30% by mass or more, or 35% by mass or more, and may be 80% by mass or less, 75% by mass or less, 70% by mass or less, 60% by mass or less, 50% by mass or less, or 40% by mass or less, based on the total amount of the monomer units in the acrylic rubber.

The content of ethylene may be 5% by mass or more, preferably 6% by mass or more, 7% by mass or more, 8% by mass or more, 9% by mass or more, or 10% by mass or more, and may be 20% by mass or less, 17% by mass or less, or 15% by mass or less, based on the total amount of the monomer units in the acrylic rubber.

The mass ratio of the content of ethylene to the content of the vinyl carboxylate (content of ethylene / content of vinyl carboxylate) is preferably 0.1 to 0.5 from the viewpoint of obtaining a crosslinked product with the high tensile strength and the excellent oil resistance. The lower limit of the mass ratio may be 0.12, 0.14, 0.16, or 0.18. The upper limit of the mass ratio may be 0.4, 0.3, 0.25, 0.23, or 0.21.

The acrylic rubber may further contain a crosslinking monomer as the monomer units. The crosslinking monomer is a monomer that can be copolymerized with the (meth)acrylate, the vinyl carboxylate, and the ethylene, and has a crosslinking group that forms a crosslinking site (also called a crosslinking point). The crosslinking monomer has a polymerizable carbon-carbon double bond, for example, an acryloyl group, a methacryloyl group, an allyl group, a methallyl group, a vinyl group, or an alkenylene group. Examples of the crosslinking group include a carboxyl group, an epoxy group, and an active chlorine group. The crosslinking monomer may have one or more of these functional groups. In this specification, a monomer that can be classified as both a (meth)acrylate or vinyl carboxylate and a crosslinking monomer is classified as a crosslinking monomer.

Examples of the crosslinking monomer having a carboxyl group as the crosslinking group include acrylic acid, methacrylic acid, crotonic acid, 2-pentenoic acid, maleic acid, fumaric acid, itaconic acid, and monoalkyl maleate.

Examples of the crosslinking monomer having an epoxy group as the crosslinking group include glycidyl acrylate, glycidyl methacrylate, allyl glycidyl ether, and methallyl glycidyl ether.

Examples of the crosslinking monomer having an active chlorine group as the crosslinking group include 2-chloroethyl vinyl ether, 2-chloroethyl acrylate, vinylbenzyl chloride, vinyl chloroacetate, and allyl chloroacetate.

The content of the crosslinking monomer may be 0.5% by mass or more, 1% by mass or more, or 1.5% by mass or more, and may be 10% by mass or less, 7% by mass or less, or 4% by mass or less, based on the total amount of the monomer units in the acrylic rubber.

The acrylic rubber may contain an additional monomer copolymerizable with the above-described monomers as the monomer units. Examples of the additional monomer include an alkyl vinyl ketone, a vinyl ether, an allyl ether, a vinyl aromatic compound, a vinyl nitrile, a dialkyl maleate, a dialkyl fumarate, a dialkyl itaconate, a dialkyl citraconate, a dialkyl mesaconate, a dialkyl 2-pentene diacid, and a dialkyl acetylenedicarboxylate.

The acrylic rubber can be obtained by copolymerizing the above-described monomers by a known polymerization method such as emulsion polymerization, suspension polymerization, solution polymerization, or bulk polymerization, preferably by suspension polymerization.

In the above copolymerization, a monomer mixture containing all the monomers constituting the acrylic rubber may be prepared, and ethylene may be pressurized into the monomer mixture to start polymerization. In the above copolymerization, it is preferable to add the vinyl carboxylate in portions, and more preferably to add both the vinyl carboxylate and the (meth)acrylate in portions.

In the above copolymerization, it is more preferable to perform the polymerization by the following method. First, while preparing a monomer mixture containing a part of the vinyl carboxylate to be used, the remaining vinyl carboxylate or its solution, and all or a solution of the (meth)acrylate to be used are separately prepared. Next, ethylene is pressurized into the monomer mixture to start polymerization, and simultaneously with the start of polymerization, the remaining vinyl carboxylate or its solution, and all or a solution of the (meth)acrylate are added at a constant rate until the end of polymerization. At this time, the mass ratio of the part of the vinyl carboxylate used in the monomer mixture to the remaining vinyl carboxylate (part of the vinyl carboxylate: remaining vinyl carboxylate) is preferably 10:90 to 70:30, more preferably 20:80 to 60:40.

Another embodiment of the present invention is a rubber composition containing the above-described acrylic rubber. The rubber composition may further contain a crosslinking agent. The rubber composition may further contain a crosslinking accelerator. In this case, the rubber composition is kneaded at a temperature equal to or lower than the crosslinking temperature and then heated at a predetermined crosslinking temperature to obtain a crosslinked product. Another embodiment of the present invention is a crosslinked product of the above-described rubber composition.

The heating conditions for crosslinking can be appropriately set depending on the blending of the rubber composition or the type of the crosslinking agent. The heating temperature may be 100°C or higher and may be 200°C or lower. The heating time may be 1 hour or longer and may be 10 hours or shorter. As a heating method, methods used in crosslinking of rubber such as hot press heating, steam heating, and oven heating can be used.

Apparatuses for kneading, molding, and crosslinking the rubber composition, and apparatuses for kneading and molding the crosslinked product of the rubber composition, can be apparatuses generally used for rubber compositions. As the kneading apparatus, a roll, a kneader, a Banbury mixer, an internal mixer, and a twin-screw extruder can be used.

The crosslinking agent is not particularly limited as long as it is generally used in crosslinking of the acrylic rubber. Examples of the crosslinking agent include amine compounds, imidazole compounds, organic peroxides, and polyfunctional (meth)acrylate compounds having two or more (meth)acryloyl groups.

The content of the crosslinking agent in the rubber composition may be 0.1 parts by mass or more, 0.5 parts by mass or more, or 1 part by mass or more, and may be 15 parts by mass or less, 10 parts by mass or less, or 5 parts by mass or less, with respect to 100 parts by mass of the acrylic rubber.

The crosslinking accelerator is not particularly limited as long as it is generally used in crosslinking of the acrylic rubber. Examples of the crosslinking accelerator include thiazine compounds, quaternary onium salts, guanidine compounds, tertiary phosphine compounds, alkali metal salts of weak acids, and diazabicycloalkene compounds.

The content of the crosslinking accelerator in the rubber composition may be 0.1 parts by mass or more, 0.2 parts by mass or more, or 0.3 parts by mass or more, and may be 5 parts by mass or less, 4 parts by mass or less, or 3 parts by mass or less, with respect to 100 parts by mass of the acrylic rubber.

The rubber composition may further contain a filler (reinforcing agent). Examples of the filler include a carbon black, a silica, a talc, and calcium carbonate. The content of the filler in the rubber composition may be 30 parts by mass or more and may be 100 parts by mass or less, with respect to 100 parts by mass of the acrylic rubber.

The rubber composition may further contain a lubricant. Examples of the lubricant include a liquid paraffin, stearic acid, stearylamine, a zinc fatty acid, a fatty acid ester, and an organosilicone. The content of the lubricant in the rubber composition may be 0.1 parts by mass or more and may be 10 parts by mass or less, with respect to 100 parts by mass of the acrylic rubber.

The rubber composition may further contain an anti-aging agent. Examples of the anti-aging agent include amine-based anti-aging agents and phenol-based anti-aging agents. The content of the anti-aging agent in the rubber composition may be 0.1 parts by mass or more and may be 10 parts by mass or less, with respect to 100 parts by mass of the acrylic rubber.

The rubber composition may further contain a surfactant. Examples of the surfactant include alkyl sulfate ester salts. The content of the surfactant in the rubber composition may be 0.1 parts by mass or more and may be 10 parts by mass or less, with respect to 100 parts by mass of the acrylic rubber.

The rubber composition may further contain a release agent. Examples of the release agent include phosphate esters. The content of the release agent in the rubber composition may be 0.1 parts by mass or more and may be 10 parts by mass or less, with respect to 100 parts by mass of the acrylic rubber.

The above-described rubber composition is suitably used as a rubber composition for a seal (also referred to as a sealing member) or a hose (also referred to as a hose member). The rubber composition can also be used as a rubber composition for a vibration-proof rubber (also referred to as a vibration-proof rubber member) or a wire coating rubber (also referred to as a wire coating rubber member). The crosslinked product of the above-described rubber composition is suitably used as a seal or a hose. That is, another embodiment of the present invention is a seal or a hose containing the above-described crosslinked product. The crosslinked product can also be used as a vibration-proof rubber or a wire coating rubber. That is, another embodiment of the present invention is a vibration-proof rubber containing the above-described crosslinked product. Examples of the hose (hose member) include rubber hoses. Examples of the seal (sealing member) include gaskets and packings. These members may consist of the crosslinked product of the rubber composition, and may contain this crosslinked product and an additional part.

Specific examples of the hose (hose member) include transmission oil cooler hoses, engine oil cooler hoses, air duct hoses, turbo intercooler hoses, hot air hoses, radiator hoses, power steering hoses, fuel-line hoses, and drain-line hoses of automobiles, construction machines, hydraulic equipment, and the like. The hose member may have reinforcing filaments or wires in an intermediate layer or an outermost layer of the hose.

Specific examples of the seal (sealing member) include engine head cover gaskets, oil pan gaskets, oil seals, lip seal packings, O-rings, transmission seal gaskets, crank shafts, cam shaft seal gaskets, valve stems, power steering seals, belt cover seals, constant-velocity-joint boot materials, and rack-and-pinion boot materials.

Specific examples of the vibration-proof rubber (vibration-proof rubber member) include damper pulleys, center support cushions, and suspension bushings.

### Examples

Hereinafter, the present invention will be more specifically described based on examples, but the present invention is not limited by these examples.

### [Example 1] (Production of acrylic rubber)

In a pressure-resistant reaction container having an internal volume of 40 liters, 5 kg of vinyl acetate, 12 kg of a 5% by mass aqueous solution of partially saponified polyvinyl alcohol (saponification degree of polyvinyl alcohol: 88 mol%), and 31 g of sodium acetate were charged, and the whole was thoroughly mixed with a stirrer in advance, thereby preparing a homogeneous suspension. Separately, 5 kg of vinyl acetate and 3 kg of an alkyl acrylate (ethyl acrylate, butyl acrylate) were prepared. After replacing the air in the upper part of the container with nitrogen, ethylene was pressurized into the upper part of the container at a pressure of 5 MPa. After maintaining the container at 55°C while continuing stirring, 2 liters of an aqueous solution of 1.6% by mass of t-butyl hydroperoxide were added to start polymerization. Simultaneously with the start of polymerization, the separately prepared vinyl acetate and the separately prepared alkyl acrylate were added at a constant rate until the end of the reaction. The temperature in the container was maintained at 55°C, and the reaction was terminated after 6 hours. To the resulting copolymer, 7 liters of an aqueous solution of 3.5% by mass of sodium borate were added to solidify the copolymer. The solidified copolymer was then washed with water, dehydrated, and dried to obtain an acrylic rubber.

The monomer composition of the obtained acrylic rubber was measured by ¹H-NMR (AVANCE III HD500 manufactured by Bruker) on a solution obtained by dissolving the acrylic rubber in chloroform.

### (Preparation of rubber composition)

Subsequently, 100 parts by mass of the obtained acrylic rubber, 50 parts by mass of filler (carbon black, "SEAST SO" manufactured by TOKAI CARBON CO., LTD.), 1 part by mass of lubricant A (stearic acid, "LUNAC S-90" manufactured by Kao Corporation), 0.5 parts by mass of amine-based anti-aging agent ("NOCRAC CD" manufactured by Ouchi Shinko Chemical Industrial Co., Ltd.), 0.5 parts by mass of release agent (a mixture of a fatty acid, a fatty acid ester, an amine, and a wetting agent, "MOLDWIZ INT-21G" manufactured by Axel), 8 parts by mass of crosslinking agent A ("PERBUTYL P-40" manufactured by NOF Corporation), 3 parts by mass of crosslinking agent B (trimethylolpropane trimethacrylate, "MONOSIZER-TD-1500" manufactured by DIC Corporation), and 0.5 parts by mass of crosslinking accelerator A (phenothiazine, manufactured by Seiko Chemical Co., Ltd.) were kneaded using an 8-inch open roll to obtain a rubber composition.

### (Production of crosslinked product)

The obtained rubber composition was extruded into a sheet with a thickness of 2.4 mm, and then heated and pressurized at 170°C and a pressure of 4 MPa for 20 minutes using a press vulcanizer to obtain a primary crosslinked product of the rubber composition. Subsequently, the primary crosslinked product was heated at 170°C for 4 hours in a gear oven to obtain a secondary crosslinked product of the rubber composition.

### (Measurement of tensile strength)

The tensile strength of the obtained secondary crosslinked product was measured according to JIS K6251:2010.

### (Evaluation of oil resistance)

Using the obtained primary crosslinked product, evaluation samples were prepared according to JIS K6250:2019, and the evaluation samples were immersed in IRM903 oil at 150°C for 72 hours according to JIS K6258:2016. The volume change rate ΔV (%) of the evaluation samples before and after immersion was measured.

### [Examples 2 to 4]

Except for changing the monomer composition as shown in Table 1, the acrylic rubber was produced, the rubber composition was prepared, and the crosslinked product was produced, in the same manner as in Example 1. The monomer composition of the obtained acrylic rubber was calculated in the same manner as in Example 1. The tensile strength of the obtained secondary crosslinked product was measured in the same manner as in Example 1. The oil resistance of the obtained primary crosslinked product was evaluated in the same manner as in Example 1.

[Example 5] Except for changing the monomer composition as shown in Table 1, the acrylic rubber was produced in the same manner as in Example 1. The monomer composition was calculated in the same manner as in Example 1.

Subsequently, 100 parts by mass of the obtained acrylic rubber, 50 parts by mass of filler (carbon black, "SEAST SO" manufactured by TOKAI CARBON CO., LTD.), 1 part by mass of lubricant A (stearic acid, "LUNAC S-90" manufactured by Kao Corporation), 0.5 parts by mass of amine-based anti-aging agent ("NOCRAC CD" manufactured by Ouchi Shinko Chemical Industrial Co., Ltd.), 0.5 parts by mass of release agent (a mixture of a fatty acid, a fatty acid ester, an amine, and a wetting agent, "MOLDWIZ INT-21G" manufactured by Axel), 1.7 parts by mass of crosslinking agent C (1-(2-cyanoethyl)-2-methylimidazole, "CN-25" manufactured by Shikoku Chemicals Corporation), 0.3 parts by mass of crosslinking accelerator B (ammonium benzoate, "VULNOCK AB" manufactured by Ouchi Shinko Chemical Industrial Co., Ltd.), and 1 part by mass of surfactant (sodium dodecyl sulfate, "EMAL 0" manufactured by Kao Corporation) were kneaded using an 8-inch open roll to obtain a rubber composition.

Using the obtained rubber composition, a crosslinked product was produced in the same manner as in Example 1. The tensile strength and oil resistance of the obtained secondary crosslinked product were measured and evaluated in the same manner as in Example 1.

### [Comparative Example 1]

A commercially available acrylic rubber ("VAMAC DP" manufactured by DuPont) was used as the acrylic rubber. This acrylic rubber contains an alkyl acrylate and ethylene but does not contain any vinyl carboxylate.

Subsequently, 100 parts by mass of the acrylic rubber, 40 parts by mass of filler (carbon black, "SEAST SO" manufactured by TOKAI CARBON CO., LTD.), 1 part by mass of lubricant A (stearic acid, "LUNAC S-90" manufactured by Kao Corporation), 0.5 parts by mass of amine-based anti-aging agent ("NOCRAC CD" manufactured by Ouchi Shinko Chemical Industrial Co., Ltd.), 0.5 parts by mass of release agent (a mixture of a fatty acid, a fatty acid ester, an amine, and a wetting agent, "MOLDWIZ INT-21G" manufactured by Axel), 0.3 parts by mass of lubricant B (stearylamine, "FARMIN 80S" manufactured by Kao Corporation), 8 parts by mass of crosslinking agent A ("PERBUTYL P-40" manufactured by NOF Corporation), and 3 parts by mass of crosslinking agent B (trimethylolpropane trimethacrylate, "MONOSIZER TD-1500" manufactured by DIC Corporation) were kneaded using an 8-inch open roll to obtain a rubber composition.

Using the obtained rubber composition, a crosslinked product was produced in the same manner as in Example 1. The tensile strength of the obtained secondary crosslinked product was measured in the same manner as in Example 1. The oil resistance of the obtained primary crosslinked product was evaluated in the same manner as in Example 1.

### [Comparative Example 2]

In a pressure-resistant reaction container having an internal volume of 40 liters, 13 kg of a monomer mixture containing the monomers shown in Table 1 (excluding ethylene), 12 kg of a 5% by mass aqueous solution of partially saponified polyvinyl alcohol (saponification degree of polyvinyl alcohol: 88 mol%), and 31 g of sodium acetate were charged, and the whole was thoroughly mixed with a stirrer in advance, thereby preparing a homogeneous suspension. After replacing the air in the upper part of the container with nitrogen, ethylene was pressurized into the upper part of the container at a pressure of 5 MPa. After maintaining the container at 55°C while continuing stirring, 2 liters of an aqueous solution of 1.6% by mass of t-butyl hydroperoxide were added to start polymerization. The temperature in the container was maintained at 55°C, and the reaction was terminated after 6 hours. To the resulting copolymer, 7 liters of an aqueous solution of 3.5% by mass of sodium borate were added to solidify the copolymer. The solidified copolymer was then washed with water, dehydrated, and dried to obtain an acrylic rubber. The monomer composition of the obtained acrylic rubber was calculated in the same manner as in Example 1. The monomer composition is shown in Table 1.

Subsequently, 100 parts by mass of the obtained acrylic rubber, 50 parts by mass of filler (carbon black, "SEAST SO" manufactured by TOKAI CARBON CO., LTD.), 1 part by mass of lubricant A (stearic acid, "LUNAC S-90" manufactured by Kao Corporation), 0.5 parts by mass of amine-based anti-aging agent ("NOCRAC CD" manufactured by Ouchi Shinko Chemical Industrial Co., Ltd.), 1.4 parts by mass of crosslinking agent C (1-(2-cyanoethyl)-2-methylimidazole, "CN-25" manufactured by Shikoku Chemicals Corporation), 0.3 parts by mass of crosslinking accelerator B (ammonium benzoate, "VULNOCK AB" manufactured by Ouchi Shinko Chemical Industrial Co., Ltd.), and 1 part by mass of surfactant (sodium dodecyl sulfate, "EMAL 0" manufactured by Kao Corporation) were kneaded using an 8-inch open roll to obtain a rubber composition.

Using the obtained rubber composition, a crosslinked product was produced in the same manner as in Example 1. The tensile strength and oil resistance of the obtained secondary crosslinked product were measured and evaluated in the same manner as in Example 1.

### [Comparative Example 3]

Except for changing the monomer composition as shown in Table 1, the acrylic rubber was produced in the same manner as in Comparative Example 2. The monomer composition of the obtained acrylic rubber was calculated in the same manner as in Example 1.

Subsequently, 100 parts by mass of the obtained acrylic rubber, 60 parts by mass of filler (carbon black, "SEAST SO" manufactured by TOKAI CARBON CO., LTD.), 1 part by mass of lubricant A (stearic acid, "LUNAC S-90" manufactured by Kao Corporation), 1 part by mass of amine-based anti-aging agent ("NOCRAC CD" manufactured by Ouchi Shinko Chemical Industrial Co., Ltd.), 0.3 parts by mass of lubricant B (stearylamine, "FARMIN 80S" manufactured by Kao Corporation), 0.4 parts by mass of crosslinking agent D (hexamethylenediamine carbamate, "VC-1" manufactured by Viton), and 1.2 parts by mass of crosslinking accelerator C (a synthetic mixture of active amine and retarder, "RENOX XLA-60" manufactured by LANXESS) were kneaded using an 8-inch open roll to obtain a rubber composition.

Using the obtained rubber composition, a crosslinked product was produced in the same manner as in Example 1. The tensile strength and oil resistance of the obtained secondary crosslinked product were measured and evaluated in the same manner as in Example 1.

The monomer compositions of the acrylic rubbers used in the Examples and Comparative Examples, and the measurement results of the tensile strength and evaluation results of the oil resistance in each of the Examples and Comparative Examples are shown in Table 1.

**[Table 1]**

| | | Example 1 | Example 2 | Example 3 | Example 4 | Example 5 | Comp. Example 1 | Comp. Example 2 | Comp. Example 3 |
|---|---|---|---|---|---|---|---|---|---|
| Monomer Composition (% by mass) | Ethyl acrylate | 17 | 57 | 68 | 77 | 56 | Commercial product (containing alkyl acrylate and ethylene) | 44 | 72 |
| | Butyl acrylate | - | - | - | - | - | | 36 | 27 |
| | Vinyl acetate | 69 | 36 | 26 | 18 | 37 | | 14 | - |
| | Ethylene | 14 | 7 | 6 | 6 | 7 | | 3 | 2 |
| | Glycidyl methacrylate | - | - | - | - | 1.5 | | 1.6 | - |
| | Monobutyl maleate | - | - | - | - | - | | - | 1.6 |
| Tensile strength (MPa) | | 15.0 | 15.2 | 14.5 | 13.7 | 15.8 | 17.8 | 12.5 | 12.7 |
| Oil resistance ΔV (%) | | +10 | +10 | +14 | +18 | +11 | +45 | +26 | +23 |

In Examples 1 to 5, the crosslinked products of the acrylic rubber with high tensile strength and excellent oil resistance were obtained. On the other hand, the crosslinked product of the acrylic rubber in Comparative Example 1 had relatively high tensile strength, but the oil resistance of the crosslinked product was significantly inferior. In addition, the crosslinked products of the acrylic rubber in Comparative Examples 2 and 3 had low tensile strength.

## Claims

1. An acrylic rubber comprising a (meth)acrylate, a vinyl carboxylate, and ethylene, as monomer units,
wherein a content of the vinyl carboxylate is 15% by mass or more and a content of the ethylene is 5% by mass or more, based on a total amount of the monomer units in the acrylic rubber.

2. The acrylic rubber according to claim 1, wherein a mass ratio of the content of the ethylene to the content of the vinyl carboxylate is 0.1 to 0.5.

3. The acrylic rubber according to claim 1 or 2, wherein the (meth)acrylate comprises at least one selected from the group consisting of an alkyl (meth)acrylate and an alkoxy (meth)acrylate.

4. The acrylic rubber according to claim 1 or 2, wherein the vinyl carboxylate comprises at least one selected from the group consisting of vinyl acetate, vinyl neodecanoate, and vinyl laurate.

5. A rubber composition comprising:
the acrylic rubber according to claim 1 or 2; and
a crosslinking agent.

6. A crosslinked product of the rubber composition according to claim 5.
